# EUROPÄISCHE PATENTSCHRIFT

(11) **EP 0 592 910 B1**
(45) Veröffentlichungstag und Bekanntmachung des Hinweises auf die Patenterteilung: **16.07.1997**
(21) Anmeldenummer: 93115983.4
(22) Anmeldetag: 04.10.1993
(51) Int. Cl.: C08L 67/06, C08L 63/10, C08L 75/14, C08L 23/02

(54) **Härtbare Formmasse enthaltend ungesättigtes Polyesterharz und feinteilige Polyolefinpartikel**
Curable moulding composition comprising unsaturated polyester and fine polyolefin particles
Masse à mouler durcissable comprenant un polyester insaturé et des particules de polyoléfine fines

(30) Priorität: 12.10.1992 DE 4234324
(43) Veröffentlichungstag der Anmeldung: 20.04.1994
(73) Patentinhaber: DSM RESINS B.V., 8022 AW Zwolle (NL)
(72) Erfinder: Hesse, Anton, Dr., D-6940 Weinheim (DE); Berger, Albin, Dr., D-6700 Ludwigshafen (DE); Heckmann, Walter, Dr., D-6940 Weinheim (DE); Klimesch, Roger, Dr., D-6146 Alsbach-Haehnlein (DE)
(74) Vertreter: den Hartog, Jeroen Hendrikus Joseph

(56) Entgegenhaltungen:
- EP-A- 0 274 273
- FR-A- 2 276 352
- FR-A- 2 322 171

## Beschreibung

Die Erfindung betrifft eine warmhärtbare Formmasse auf Basis eines ungesättigten Polyesterharzes, welches feinteilige Polyolefinpartikel dispergiert enthält.

Formmassen auf Basis von faserverstärkten ungesättigten Polyesterharzen werden in zunehmendem Maße zur Herstellung von Formteilen, insbesondere im Automobilbau, eingesetzt. Sie werden dabei vorwiegend in Form von eingedicktem, flächigem Halbzeug, sogenannten "sheet molding compounds" (SMC) oder als teigförmige Formmasse, sogenannte "bulk molding compounds" (BMC) verarbeitet. In beiden Fällen geht man aus von einem ungesättigten Polyesterharz, das mit Verstärkungsfasern, Füllstoffen, radikalischen Initiatoren und anderen Zusatzstoffen vermischt wird. Die Verarbeitung erfolgt durch Pressen oder Extrudieren bei verhältnismäßig niedriger Temperatur um 130 bis 160°C, wobei auch komplizierte Formwerkzeuge problemlos gefüllt werden können. Die damit hergestellten Formteile weisen, wenn den Formmassen schrumpfmindernde Thermoplasten zugesetzt wurden, eine ausgezeichnete Oberfläche auf.

In den deutschen Patentanmeldungen P 41 24 952.6 und P 42 17 914.9 sind Verfahren zur Herstellung von härtbaren Formmassen auf Basis von Dispersionen von Polyolefinpartikeln in ungesättigten Polyesterharzen beschrieben, bei denen man die Schmelze eines ungesättigten Polyesters und die Schmelze eines Propylenpolymerisats bzw. eines Ethylenpolymerisats zusammenführt, die flüssige Mischung einem Scherfeld unterwirft und ein Vinylmonomeres zusetzt. Derartige Formmassen können zu Formkörpern mit hoher Zähigkeit und geringer Schrumpfneigung ausgehärtet werden. Die Dispersionen der festen Polyolefinpartikel in dem flüssigen Harz haben jedoch eine begrenzte Lagerfähigkeit; bereits nach einigen Wochen oder gar Tagen tritt eine Phasenseparation ein und die Dispersion rahmt auf, da die Polyolefinpartikel zur Reagglomeration neigen. Außerdem ist für sehr hohe Ansprüche die Schrumpfneigung der gehärteten Formmassen noch zu stark.

Der Erfindung lag daher die Aufgabe zugrunde, diese Nachteile zu vermeiden. Die Lösung dieser Aufgabe besteht in einer chemischen Anbindung der dispersen Polyolefinphase an der Grenzfläche der kohärenten Polyesterphase.

Gegenstand der Erfindung ist demzufolge eine härtbare Formmasse, enthaltend
A. als kohärente Phase ein radikalisch härtbares, ungesättigtes Polyesterharz und
B. als disperse Phase feinteilige Polyolefinpartikel,
wobei die Phasen A und B durch ionische Bindungen an den Grenzflächen chemisch miteinander verbunden sind.

Bevorzugt enthält die kohärente Phase A ein Säuregruppen tragendes Polymeres oder Oligomeres und die disperse Phase B ein Aminogruppen tragendes Polymeres oder Oligomeres, wobei die reaktiven Gruppen an der Grenzfläche eine ionische Bindung eingehen.

Nach der DE-A 12 41 983 werden Polyesterpreßmassen hergestellt durch Vermischen einer styrolischen Lösung eines Ethylen/Vinylacetat-Mischpolymerisats mit einer styrolischen Lösung eines ungesättigten Polyesters und einem Peroxid. Derartige Öl-in-Öl-Emulsionen neigen jedoch zu Phasenseparation, was ihre Verarbeitung problematisch macht. Dies trifft auch auf die SMC- und BMC-Massen nach US-A 4 161 471 zu, die durch Zusatz eines Chloropren- oder Ethylen/Propylen-Kautschuks elastifiziert werden. Die Ethylen/Propylen-Copolymeren werden in einem aufwendigen Verfahren erst thermisch abgebaut, dann mit Styrol angepastet und mit einer Polyesterharzpaste vermischt. Dabei entsteht eine Öl-in-Öl-Emulsion.

Die DE-A 23 05 246 betrifft eine ungesättigte Polyesterharzmasse, die ein pulverförmiges Olefinpolymerisat, auf welches ein Vinyl- oder Acrylmonomeres gepfropft ist, dispergiert enthält. Dieses wird auf umständliche Weise hergestellt durch Bestrahlen von Polyethylenpulver mit Elektronenstrahlen, Dispergieren in Wasser, Zusatz von Styrol, Polymerisation, Filtrieren und Trocknen des entstandenen Pfropfpolymerisats, das schließlich in eine Lösung eines ungesättigten Polyesters in Styrol eingerührt wird. Die Lagerstabilität derartiger Dispersionen ist ungenügend. Eine chemische Bindung der Phasen aneinander ist nicht zu erwarten.

In den Druckschriften DE-B 24 08 898, DE-B 24 10 083 und DE-A 24 49 785 ist ein Verfahren zur Herstellung fließfähiger, stabiler Dispersionen von Ethylenpolymerisaten in styrolischen Lösungen von ungesättigten Polyestern beschrieben. Dabei wird bei erhöhter Temperatur ein Ethylenpolymerisat, z.B. Hochdruckpolyethylen, in Styrol gelöst, diese Lösung wird mit einer styrolischen Lösung des ungesättigten Polyesters unter Einwirkung starker Scherkräfte vereinigt und die Mischung wird in Gegenwart üblicher Dispergatoren so lange gerührt, bis sich ein niederviskoser, fließfähiger Zustand ausgebildet hat. Die genannten üblichen Dispergatoren enthalten jedoch keine reaktiven Gruppen, welche eine chemische Anbindung der dispersen Polyethylenphase an die kohärente Polyesterphase ermöglichen würden. Dementsprechend ist auch hier die Schrumpfneigung der gehärteten Formmassen noch verhältnismäßig stark und die Rißempfindlichkeit bei Stoßbeanspruchung ist merklich.

Zu den einzelnen Komponenten ist folgendes zu sagen:

Ungesättigte Polyester sind durch einen Gehalt an 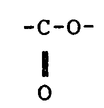 und -CH=CH- Gruppen gekennzeichnet.
1. Bevorzugt sind die ungesättigten Polyester (UP) im strengeren Sinne. Dies sind Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Die Säurezahl des ungesättigten Polyesterharzes sollte zwischen 10 und 100, insbesondere zwischen 15 und 60 liegen. Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits.
2. Geeignet sind auch Vinylesterharze (VE-Harze). Kennzeichnend für diese Klasse von Harzen ist die Gruppe 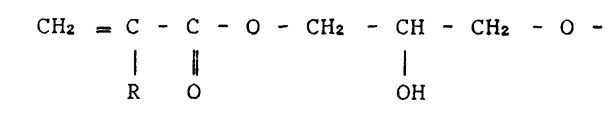 mit R = H oder CH₃.
   Unter VE-Harzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
   Neben üblichen VE-Harzen sind auch carboxylmodifizierte Varianten vorteilhaft einsetzbar. Sie lassen sich leicht durch Umsetzung der Hydroxylgruppen von VE-Harzen mit Dicarbonsäureanhydriden, wie beispielsweise Maleinsäureanhydrid, o-Phthalsäureanhydrid oder Tetrahydrophthalsäureanhydrid, herstellen, wobei unter Ringöffnung Halbesterstrukturen entstehen.
3. Vinylesterurethanharze (VU-Harze) sind bekannt, z.B. aus US-A 3 297 845, US-A 3 772 404, US-A 4 618 658, GB-A 2 217 722 und DE-A 37 44 390. Sie weisen im allgemeinen folgende Gruppen auf:
   a) 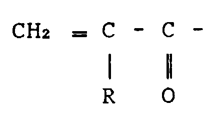 (mit R = H oder CH₃).
   b) 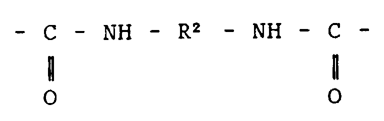 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
   c)

      - O - R³ - O -

      (mit R³ = zweiwertiger aliphatischer, cycloaliphatischer oder aromatischer Rest mit 2 bis 500 C-Atomen, vorzugsweise ein aliphatischer Rest mit 4 bis 100 C-Atomen), sowie gegebenenfalls
   d)

      - NH - R⁴ - NH -

      (mit R⁴ = aliphatischer, cycloaliphatischer oder aromatischer Rest mit 2 bis 100 C-Atomen).

   Vorzugsweise ist das VU-Harz ein Umsetzungsprodukt aus
   - einem polyfunktionellen Isocyanat,
   - gegebenenfalls einem mehrwertigen Alkohol,
   - gegebenenfalls einem mehrwertigen Amin,
   - einem Hydroxyalkyl-(meth)acrylat,
   wobei bei der Umsetzung das Gewichtsverhältnis Isocyanat:(Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die kohärente Phase A enthält vorzugsweise neben dem ungesättigten Polyesterharz übliche Vinyl- oder Allyl-Comonomere, z.B. Styrol, Vinyltoluol, Methylmethacrylat, Hydroxyethylmethacrylat, Hydroxypropylmethacrylat, Trimethylolpropantrimethacrylat, Diallylphthalat oder Diallylisophthalat in Mengen von bis zu 60, vorzugsweise 20 bis 50 Gew.-%, bezogen auf A, sowie übliche Inhibitoren in Mengen von 0,001 bis 0,2 Gew.-%, bezogen auf A.

Die kohärente Phase enthält erfindungsgemäß ein Säuregruppen, vorzugsweise Carboxylgruppen tragendes Polymeres oder Oligomeres. UP-Harze im strengen Sinne tragen im allgemeinen selbst in ausreichender Menge Carboxyl-Endgruppen. Im Falle der üblichen VE- und VU-Harze, aber auch bei UP-Harzen mit niedrigen Säurezahlen oder ohne Carboxylgruppen müssen Säuregruppen tragende, mit dem Harz verträgliche Oligomere oder Polymere in Mengen von 2 bis 50, vorzugsweise 5 bis 25 Gew.-%, bezogen auf A, zugesetzt werden. Bevorzugt sind Copolymere des Vinylacetats mit (Meth-)Acrylsäure, Maleinsäure, einem Maleinsäurehalbester, Vinylsulfonsäure oder Vinylphosphonsäure, sowie gesättigte Polyester oder ungesättigte Polyester, insbesondere solche mit Säurezahlen von größer als 20.

Als Polyolefine der dispersen Phase B sind Ethylen- und Propylenpolymerisate bevorzugt, daneben ist die Erfindung grundsätzlich auch bei höheren Polyolefinen, wie Polybuten oder Polyisobuten anwendbar.

Ethylenpolymerisate im Sinne der Erfindung sind Homopolymerisate des Ethylens und Copolymerisate mit weniger als 50 Mol-%, insbesondere 0 bis 40 Mol-% üblicher Comonomerer. Als Comonomere finden α-Olefine mit 3 bis 8 C-Atomen, wie Propylen, Isobuten, Buten-1 Verwendung. Ferner sind auch Vinylester organischer Carbonsäuren mit 1 bis 19 C-Atomen, vorzugsweise Vinylacetat, Vinylhalogenide wie Vinylchlorid, (Meth)acrylsäure, ihre Ester, die 1 bis 8 C-Atome in der Alkoholkomponente enthalten, ihre Nitrile und Amide, wie beispielsweise Methylmethacrylat, Ethylacrylat, Butylacrylat, (Meth)acrylnitril, ggf. substituiertes (Meth)acrylamid geeignet. Auch Pfropfcopolymerisate sind geeignet, beispielsweise solche mit Maleinsäureanhydrid als Pfropfcomonomer.

Bevorzugtes Ethylenpolymerisat ist Hochdruckpolyethylen, daneben sind auch nach dem Niederdruckverfahren hergestellte Polyethylentypen gut geeignet.

Die nach DIN 53 735 bei 190°C und 2.16 kg Belastung gemessenen Schmelzindexwerte des Ethylenpolymerisats liegen vorzugsweise im Bereich von nicht fließfähig bis zu 1.000 [g/10 min]; bevorzugt werden Polyethylentypen mit Schmelzindexwerten zwischen 1 und 40 verwendet.

Die nach ISO 3146 gemessene DSC-Schmelzpunkte liegen vorzugsweise unterhalb von 136°C, insbesondere zwischen 90 und 135°C.

Es können auch Gemische verschiedener Ethylenpolymerisate eingesetzt werden, wobei sich die Komponenten durch ihr Molekulargewicht, die Polarität und den Schmelzpunkt deutlich unterscheiden können. Ebenso kann man von Abmischungen von Ethylenpolymerisaten mit untergeordneten Mengen anderer Thermoplaste, z.B. von Polypropylen ausgehen, insbesondere von einem niedermolekularen, thermisch abgebauten Polypropylen, oder von einem mit Maleinsäureanhydrid gepfropften Polypropylen.

Propylenpolymerisate sind vorzugsweise teilkristallin, ihr Kristallitschmelzpunkt soll höher als 125°C, vorzugsweise höher als 155°C sein. Besonders geeignet sind niedermolekulare Polymerisate mit einem Schmelzflußindex MFI von größer als 10, vorzugsweise zwischen 20 und 150 g/10 min (bei 230°C und 2,16 kg).

Bevorzugt ist Polypropylen, das durch Polymerisation von Propylen in Gegenwart eines Ziegler-Natta-Katalysatorsystems hergestellt wird.

Geeignet sind auch Copolymerisate, hergestellt durch statistische Copolymerisation von Propylen mit Ethylen, Buten-1, Penten-1, 3-Methylpenten-1, Hexen-1, Hepten-1 oder Octen-1 oder Dienen, wie z.B. Norbornadien oder Dicyclopentadien, mit einem Propylengehalt von größer als 50 Mol%.

Die disperse Phase B enthält erfindungsgemäß ein vorzugsweise aliphatische Aminogruppen tragendes Polymer oder Oligomer.

Diese Aminogruppen können direkt in das Polyolefin eingebaut sein. Derartige, aliphatische Aminogruppen tragende Polyolefine kann man z.B. herstellen, indem man das Polyolefin mit Maleinsäureanhydrid pfropft und die freie Carboxylgruppe anschließend mit einem organischen Diamin, z.B. 2-Dimethylaminoethylamin oder Dimethylneopentandiamin umsetzt.

Bevorzugt ist jedoch, daß die disperse Phase 1 bis 40, vorzugsweise 2 bis 30 Gew.-% eines aliphatische Aminogruppen tragenden, oligomeren oder polymeren Dispergiermittels C enthält. Dieses wirkt während der Schmelzedispergierung emulgierend, führt zu geringen Partikeldurchmessern und unterbindet eine Reagglomeration, die zum Absetzen der Thermoplastphase führt. Die besonders gute Wirkung rührt daher, daß die Aminogruppen an der Phasengrenzfläche mit den Säuregruppen des ungesättigten Polyesterharzes eine ionische Bindung eingehen. Als weiterer Vorteil der ionischen Bindung resultiert eine ausgezeichnete Phasenhaftung im gehärteten Formstoff.

Verschiedene Stoffklassen können als Dispergiermittel C eingesetzt werden:
1. Besonders wirksam sind wachsartige Copolymere des Ethylens mit 2 bis 50 Gew.-%, vorzugsweise 5 bis 40 Gew.-% eines aliphatische Aminogruppen tragenden Comonomeren. Das Molekulargewicht (M_{w}) des Copolymeren liegt bevorzugt zwischen 2.000 und 80.000, insbesondere zwischen 13.000 und 40.000. Geeignete Comonomere sind insbesondere Aminogruppen tragende Acrylate und Methacrylate, daneben auch Vinylimidazol und 1-Vinyl-2-methyl-imidazol. Bevorzugte Comonomere sind Dimethylamino- und Diethylaminoethylacrylat. Neben diesen Aminogruppen tragenden Comonomeren kann das Copolymere noch andere übliche Monomere, wie (Meth-)acrylate, Vinylester und Vinylether einpolymerisiert enthalten. Die Herstellung der Ethylencopolymeren erfolgt nach bekannten Methoden durch radikalisch initiierte Hochdruckmassepolymerisation bei Drücken von 500 bis 5.000 bar und Temperaturen zwischen 180 und 280°C, wobei das gewünschte Molekulargewicht durch übliche Regler, wie Wasserstoff, Kohlenwasserstoffe oder Aldehyde eingestellt werden kann.
2. Geeignet sind auch Copolymere oder Pfropfcopolymere des Ethylens oder Propylens mit funktionellen Gruppen, die mit einem aliphatischen Diamin umgesetzt werden. Beispiele sind Copolymere des Ethylens oder Propylens mit Methylmethacrylat, Acrylsäure oder Glycidylmethacrylat, bevorzugt ist ein Pfropfpolymerisat des Polypropylens mit 0,1 bis 15 Gew.-% Maleinsäureanhydrid, welches unter Halbamidbildung mit einem Diamin, welches eine tertiäre und eine sekundäre bzw. primäre aliphatische Aminogruppe trägt, umgesetzt wird. Bevorzugtes Diamin ist 2-Methylaminoethylamin.
3. Grundsätzlich geeignet sind auch Polydiene mit aliphatischen Aminoendgruppen, wie z.B. der handelsübliche aminoterminierte Butadien/Acrylnitril-Kautschuk.
4. Weitere geeignete Dispergiermittel C sind Copolymere von Vinylmonomeren, z.B. Styrol und (Meth-)Acrylaten mit Aminogruppen tragenden Comonomeren, wie z.B. Dimethylaminoethylacrylat.
5. Eine weitere gut geeignete Substanzklasse sind Michaeladdukte von aliphatischen primären oder sekundären Aminen an die Doppelbindungen von UP-, VE- oder VU-Harzen. Je nach Molverhältnis Doppelbindung zu Amin resultieren Aminogruppen tragende Oligomere bzw. Polymere, die mehr oder weniger oder auch gar keine Doppelbindungen aufweisen. Bevorzugt sind Addukte von sekundären aliphatischen oder cyclischen Aminen an UP-Harze mit hoher Styrolverträglichkeit (größer als 20 g Styrol pro 1 g UP-Harz). Besonders gut geeignete Amine sind Methylcyclohexylamin, Dibutylamin, Pyrrolidin und Piperidin. UP-Harze mit hoher Styrolverträglichkeit sind solche, die alkylverzweigte oder cycloaliphatische Bausteine enthalten, z.B. Neopentylglykol, Dipropylenglykol, hydriertes Bisphenol A einerseits und Dicyclopentadien, Endomethylentetrahydrophthalsäure, 2-Ethylhexansäure oder Stearinsäure andererseits.

In der Dispersion liegt die kohärente Phase A vorzugsweise in flüssiger Form vor, die disperse Phase B in Form feinteiliger Partikel mit einem mittleren Durchmesser (Zahlenmittel) zwischen 1 und 100 µm, vorzugsweise zwischen 3 und 30 µm. Wird im UP-Harz A auf einen Zusatz von Vinylmonomeren verzichtet, lassen sich auch rieselfähige Granulate mit disperser Polyolefinphase herstellen. In diesem Fall sind UP-Harze bevorzugt, die kristallisieren. Das gewichtsverhältnis der Phasen A:B beträgt bevorzugt zwischen 95:5 und 50:50.

Die härtbaren Formmassen enthalten bevorzugt 0,001 bis 2,0 gew.-% Stickstoff, der zumindest teilweise in Form von Ammoniumionen gebunden ist.

Zur Herstellung der erfindunqsgemäßen Dispersion wird das Polyolefin bei Temperaturen oberhalb seines Schmelzpunktes in dem ungesättigten Polyesterharz gleichmäßig verteilt. Dies kann mit jedem geeigneten Mischaggregat durchgeführt werden, vorzugsweise in einem Extruder oder einem Rührkessel mit innen- oder außenliegenden Mischvorrichtungen.
a) Extruderverfahren
   In einem Extruder, der z.B. die Form eines Doppelschneckenextruders haben kann, wird das Olefinpolymerisat vorzugsweise bei 120 bis 240°C aufgeschmolzen. über einen Seitenextruder oder durch eine Pumpe wird eine vorzugsweise 100 bis 150°C heiße Schmelze des ungesättigten Polyesters zugeführt, welche vorzugsweise den Dispersionsstabilisator C enthält. Die Verweilzeit der Schmelze im Extruder beträgt vorzugsweise 20 bis 300 s. Das Vermischen der Schmelzen geschieht in einem Scherfeld, wodurch das Polyolefin in feine Tröpfchen zerteilt wird.
   Da die Zerteilung in der Schmelze erfolgt, entstehen runde, kugelförmige Partikel mit glatter Oberfläche, die in dieser Form auch beim Abkühlen als disperse Phase in der kohärenten Polyesterphase erhalten bleiben. Das Abkühlen auf Temperaturen unterhalb des Kristallitschmelzpunktes des Polyolefins erfolgt noch im Extruder, so daß aus diesem eine Dispersion von festen Polyolefin-Partikeln im flüssigem ungesättigten Polyester ausgepreßt wird. Diese Dispersion wird dann entweder direkt mit einem Comonomeren vermischt oder sie wird weiter abgekühlt, indem man sie z.B. in Wasser extrudiert oder schmelzegranuliert. Das trockene, blockfeste
   Granulat kann gelagert und bei Bedarf in dem Comonomeren gelöst werden. In beiden Fällen entsteht eine lagerstabile Dispersion des feinteiligen Polyolefins B in einer Lösung A des ungesättigten Polyesters im Comonomeren. Das Extruderverfahren wird mit Vorteil bei hochschmelzenden Polyolefinen, z.B., bei Polypropylen angewandt.
b) Rührkesselverfahren
   Das erfindungsgemäße Vermischen der Polyesterschmelze mit der Polyolefinschmelze kann auch in üblichen Rührkesseln, die mit einem kräftigen Rührer ausgerüstet sind, erfolgen. Dabei wird vorzugsweise diskontinuierlich gearbeitet. Dieses Verfahren ist mit Vorteil auszuführen, wenn der Kristallitschmelzpunkt des Polyolefins niedrig liegt, also z.B. bei Polyethylen.
   Man kann in den Rührkessel mit der Schmelze des (vorzugsweise ein Dispergiermittel C enthaltenden ungesättigten Polyesters das Polyolefin entweder als Schmelze oder - bevorzugt - als Granulat oder Grieß eingeben. Die Massetemperatur im Rührkessel beträgt 80 bis 220°C, vorzugsweise 110 bis 200°C, die Verweilzeit 10 bis 120 min, vorzugsweise 20 bis 40 min. Nach beendeter Dispergierung wird die Schmelze aus dem Kessel ausgetragen. Sie kann granuliert werden; vorzugsweise wird sie aber anschließend mit dem Comonomeren vermischt. Dies kann entweder dadurch geschehen, daß in den Rührkessel die erforderliche Menge Monomer zugegeben und mit der Schmelze verrührt wird, oder daß die Schmelze in einen nachgeschalteten Rührkessel eingetragen wird, in dem sich Monomeres befindet, das bevorzugt auf 40 bis 90°C erwärmt ist. Auch hier entsteht wieder eine Dispersion der Polyolefinpartikel in dem ungesättigten Polyesterharz.
   Diese Dispersion kann nun über mehrere Wochen, ja sogar Monate hinweg gelagert werden, ohne daß sie sich entmischt.

Die erfindungsgemäße Dispersion kann mit üblichen Zusatzstoffen D vermischt und auf diese Weise kann ein Halbzeug hergestellt werden.

Die Zusatzstoffe D werden der flüssigen Dispersion zweckmäßigerweise in zwei Stufen zugemischt. Zunächst werden gegebenenfalls schrumpfmindernde Thermoplasten, Inhibitoren, Beschleuniger, Viskositätserniedriger und Wachse, zweckmäßigerweise jeweils gelöst oder dispergiert im Comonomeren, zugegeben. Die erhaltene Dispersion ist gut fließfähig und lagerfähig. In Ausnahmefällen, nämlich bei hohem Gehalt an Polyolefin, liegt sie als Paste vor, die zur Weiterverarbeitung leicht erwärmt werden muß. Kurz vor der Weiterverarbeitung wird dann der Radikalinitiator zugefügt, gegebenenfalls zusammen mit Füllstoffen, Fasern, Trennmitteln, Gleitmitteln und Eindickmitteln. Will man SMC-Massen herstellen, dann wird die Masse mit Verstärkungsfasern zusammen zu einem flächigen Halbzeug geformt und eingedickt.

Das Halbzeug liegt als flächige, harzgetränkte Fasermatte (SMC), als teigförmige, Kurzfasern enthaltende Spritzgußmasse (BMC), als rieselfähige Pressmasse, als harzgetränkter Faserroving oder als harzgetränktes Fasergebilde (RTM) vor. Die Weiterverarbeitung kann dementsprechend nach verschiedenen Methoden vorgenommen werden: SMC-Massen werden in Pressen, BMC-Massen durch Spritzgießen, harzgetränkte Rovings durch Wickeln und RTM-Massen in geschlossenen Formen verformt. Während oder nach dem Formen erfolgt die Härtung des ungesättigten Polyesterharzes, d.h. die Copolymerisation mit dem Comonomeren, bei Temperaturen oberhalb von 50°C, vorzugsweise bei 120 bis 170°C.

Hier sind null zwei Fälle zu unterscheiden:
a) Bei Polyesterharzen, die zu Formkörpern mit einer Glastemperatur oberhalb von 120°C aushärten und insbesondere bei Verwendung von Styrol als Comonomer verfestigt sich während der Härtung die disperse Phase zu Partikeln mit Hohlkugelstruktur. Da Polystyrol ein um 17 % geringeres Volumen als monomeres Styrol hat, schrumpft während der Polymerisation die kohärente Phase. Da nun die disperse Phase mit der kohärenten Phase durch ionische Bindungen verbunden ist, reißt das System an der weichsten Stelle, nämlich im Inneren der Polyolefinpartikel und es bilden sich dort Hohlräume, wie an der beigefügten rasterelektronenmikroskopischen Aufnahme X zu erkennen ist. Durch die Bildung der Hohlräume wird die Volumenkontraktion der kohärenten Phase kompensiert. Diese hypothetische Betrachtung liefert eine Erklärung für die hervorragend gute Schrumpfkompensation bei den erfindungsgemäßen Formmassen.
b) Bei nichtstyrolischen Comonomeren und Polyesterharzen, die zu Formkörpern mit Glastemperaturen unterhalb von 120°C aushärten, treten derartige Hohlkugelstrukturen selten auf. An Bruchflächen entstehen aber langgezogene Fetzen und Fäden der Polyolefinpartikel, was auf die chemische Anbindung der Phasen zurückzuführen ist. Dies ist an der rasterelektronenmikroskopischen Aufnahme Y zu erkennen. Diese Betrachtung liefert die Erklärung für die gute Zähmodifizierung bei den erfindungsgemäßen Formmassen.

In beiden Fällen bleiben also auch nach der Härtung die ionischen Bindungen an den Grenzflächen der beiden Phasen A und B erhalten und bewirken eine feste Haftung der Phasen aneinander.

Die erfindungsgemäßen gehärteten Formteile können im Automobilbau, im Bau- und im Elektrosektor Anwendung finden.

Die in den Beispielen genannten Teile und Prozente beziehen sich auf das Gewicht.

### Beispiele

### A) Ungesättigte Polyesterharze

UP-Harz A1
   Ein ungesättigter Polyester mit Säurezahl 36 wurde durch Kondensation von Maleinsäureanhydrid, o-Phthalsäureanhydrid, Propylenglykol und Dipropylenglykol im Molverhältnis 1:0,2:0,95:0,3 hergestellt. Das Produkt enthielt zur Stabilisierung 200 ppm Hydrochinon und 1.000 ppm Triphenylphosphit. Die Kondensation erfolgte unter Stickstoff. Die Schmelzviskosität des Polyesters betrug 720 [mPa·s] bei 150°C.
UP-Harz A2
   Ein ungesättigter Polyester mit Säurezahl 42 wurde durch Kondensation unter Stickstoff von Maleinsäureanhydrid, o-Phthalsäureanhydrid, Propylenglykol und Dipropylenglykol im Molverhältnis 1:0,3:0,95:0,4 hergestellt. Zur Stabilisierung enthielt der Polyester 200 ppm Hydrochinon und 1.000 ppm Triphenylphosphit. Die Schmelzviskosität betrug 550 [mPa·s] bei 150°C.
UP-Harz A3
   Ein ungesättigter Polyester mit Säurezahl 35 und Schmelzviskosität 490 [mPa·s] (150°C) wurde hergestellt durch Kondensation von Maleinsäureanhydrid und Dipropylenglykol im Molverhältnis 1:1. Der Polyester war mit 225 ppm Methylhydrochinon und 500 ppm Triphenylphosphit stabilisiert.
UP-Harz A4
   Ein ungesättigter Polyester mit Säurezahl 50 und Schmelzviskosität 480 [mPa·s] (150°C) wurde hergestellt durch Kondensation von Maleinsäureanhydrid, o-Phthalsäureanhydrid und Propylenglykol im Molverhältnis 1:0,5:1,5. Der Polyester war mit 50 ppm Hydrochinon stabilisiert.
VE-Harz A5
   380 Teile eines Diglycidylethers von Bisphenol A mit einem Epoxidäquivalentgewicht von 188 (Epikote ® 828 der Fa. Shell) wurden bei 110°C in Gegenwart von 0,5 % Tetramethylammoniumchlorid als Katalysator und 0,1 % Hydrochinon als Inhibitor mit 172 Teilen Methacrylsäure umgesetzt. Nach 5 Stunden war ein Epoxidwert von 0,025, eine Säurezahl von 11 und eine Schmelzviskosität bei 125°C von 305 [m·Pas] erreicht. Bei 110°C wurden nun 306 Teile o-Phthalsäureanhydrid zugesetzt, 120 Minuten gerührt und danach mit 0,03 Teilen Inhibitor Dimethylchinon versetzt, sowie anschließend mit 546 Teilen Styrol. Es resultierte eine klare Harzlösung mit einer Viskosität von 249 [m·Pas] (23°C).

### B) Polyolefine

- B1:: Ethylenhomopolymerisat mit Schmelzindex MFI (190/2.16): 36 [g/10 min] (nach DIN 53 735), Schmelzpunkt (DSC) 112°C (nach ISO 3146) und Dichte 0,924 [g/cm³] (nach DIN 53 479-A).
- B2:: Ethylenhomopolymerisat mit Schmelzindex MFI (190/2.16): 20 [g/10 min], Schmelzpunkt (DSC) 106°C und Dichte 0,916 [g/cm³].
- B3:: Ethylenhomopolymerisat mit Schmelzindex MFI (190/2.16): 18 [g/10 min], Schmelzpunkt (DSC) 132°C und Dichte 0,954 [g/cm³].
- B4:: Propylenhomopolymerisat mit Schmelzindex MFI (230/2.16): 70 [g/10 min], Schmelzpunkt (DSC) 162°C und Dichte 0,904 [g/cm³].

### C) Dispergiermittel

- C1-C3:: Polyethylenwachse mit aliphatischen Aminogruppen
- C1:: In einem gerührten 1l-Autoklaven mit einem L/D-Verhältnis von 5 wurden 12,0 kg/h Ethylen, 0,6 l/h Dimethylaminoethylacrylat bei 1.500 bar und 240°C kontinuierlich polymerisiert. Die Einstellung des gewünschten Molekulargewichts von etwa 25.000 erfolgte durch Zudosierung von Propionaldehyd. Es wurden stündlich 3,6 kg Produkt ausgetragen. Der Gehalt an Comonomer betrug 12,5 %, die Viskosität nach DIN 51 562 4.500 [cSt]. (Ubbelohde, 120°C).
- C2:: 16,0 kg/h Ethylen, 0,75 l/h Dimethylaminoethylacrylat wurden bei 1.500 bar und 200°C kontinuierlich polymerisiert. Die Einstellung des gewünschten Molekulargewichts von etwa 25.000 erfolgte durch Zudosierung von Propionaldehyd. Es wurden stündlich 2,3 kg Produkt ausgetragen. Der Gehalt an Comonomer betrug 20,8 %, die Ubbelohde-Viskosität (bei 120°C) 5.040 [cSt].
- C3:: 11,5 kg/h Ethylen, 0,4 l/h Dimethylaminoethylacrylat wurden bei 1.500 bar und 240°C kontinuierlich polymerisiert. Die Einstellung des gewünschten Molekulargewichts von etwa 45.000 erfolgte durch Zudosierung von Propionaldehyd. Es wurden stündlich 3,2 kg Produkt ausgetragen. Der Gehalt an Comonomer betrug 8,5 %, die Ubbelohde-Viskosität 4.820 [cSt].
- C4:: Michaeladdukt aus ungesättigtem Polyester und Pyrrolidin
Ein ungesättigter Polyester mit Säurezahl 28 wurde in einem zweistufigen Verfahren hergestellt, wobei im ersten Schritt äquimolare Mengen Dicyclopentadien und Maleinsäure bei 125 bis 135°C zum Maleinsäurehalbester umgesetzt und im Folgeschritt mit Ethylenglykol bei 190°C kondensiert wurden. Die Einsatzstoffe wiesen ein Molverhältnis Maleinsäure:Dicyclopentadien:Ethylenglykol wie 1:1:0,55 auf. Zur Stabilisierung wurden 100 ppm Hydrochinon während der Kondensation zugesetzt.
246 Teile dieses ungesättigten Polyesters wurden in einem Rührgefäß unter Stickstoff bei 80°C innerhalb von 35 min mit 67.4 Teilen Pyrrolidin versetzt, 2,5 Stunden bei dieser Temperatur gehalten und die Schmelze abgekühlt. Durch HNMR-spektroskopischen Vergleich konnte gezeigt werden, daß die UP-Doppelbindungen quantitativ durch Aminaddition umgesetzt worden waren.
- C5:: Vinylpolymerisat mit aliphatischen Aminogruppen
Zur Herstellung des Polymerisats wurde eine Mischung eines (als Verdünnungsmittel wirkenden) gesättigten Adipinsäurepolyesters mit einer Vinylmonomermischungpolymerisiert. 60 Teile eines gesättigten Polyesters aus Adipinsäure, Ethylenglykol und Propylenglykol mit einer Säurezahl von 8 und einer Schmelzviskosität von 1.800 [mPa·s] wurden in einem Rührgefäß unter Stickstoff mit 20 Teilen Styrol, 10 Teilen Stearylmethacrylat und 10 Teilen 2-Dimethylaminoethylacrylat vermischt, auf 85°C erwärmt, dann wurden 0,03 Teile tert.-Butylperbenzoat zugefügt und die Temperatur auf 120°C erhöht. Nach zwei Stunden bei dieser Temperatur wurde erneut mit 0,03 Teilen tert.-Butylperbenzoat versetzt, eine Stunde bei 120°C gehalten und danach abgekühlt.

### Beispiel 1

### a) Herstellung einer Dispersion

In einem Rührgefäß mit Ankerrührer wurden 40,4 Teile UP-Harz Al unter Stickstoff auf 180°C erwärmt, 1,9 Teile Dispergiermittel C1 und anschließend innerhalb von 15 Minuten portionsweise 21,1 Teile Ethylenpolymerisat B1 in Granulatform zugesetzt. Nach 25 Minuten Rührung mit 230 Umdrehungen je Minute wurde von 180°C auf 125°C abgekühlt und portionsweise mit 36,7 Teilen Styrol verdünnt, in welchem 0,093 Teile Inhibitor 2,6-Dimethylchinon gelöst waren. Nach Abkühlen auf 25°C resultierte eine feinteilige Polyethylendispersion mit einer Viskosität von 3.080 [mPa·s] (23°C) und Partikeldurchmessern zwischen 3 und 20 µm.

### b) SMC-Herstellung und Prüfung

Mit Hilfe eines schnell laufenden Rührwerks wurde folgende Harz/Füllstoff-Paste präpariert:

| | |
|---|---|
| 100 | Teile Dispersion 1a |
| 18 | Teile Styrol |
| 1,5 | Teile tert.-Butylperbenzoat |
| 4,5 | Teile Zn-Stearat |
| 1,75 | Teile MgO-Paste Luvatol ® MK 35 |
| 180 | Teile Füllstoff Kreide Millicarb ® |

Die SMC-Herstellung erfolgte auf einer Technikumsanlage, bei der die Harz/Füllstoff-Mischung auf einer Polyethylenfolie mit geschnittenen Glasfaserrovings (2,5 cm lang) vereinigt, aufgerollt und 4 Tage bei 23°C gelagert wurde. Danach ließen sich die Abdeckfolien abziehen, und das klebfreie SMC wurde in einem polierten Stahlwerkzeug 5 min lang unter 50 bar bei 145°C zu 4 mm dicken Platten mit einem Glasfasergehalt von 30 % verpreßt. Tabelle 1 zeigt die Eigenschaften eines Formstoffes aus SMC 1b.

Der Kugelfalltest wird folgendermaßen ausgeführt. Für diesen Test werden aus 4 mm dicken Formstoffplatten Prüfkörper (80 x 80 mm) ausgearbeitet, zwischen Metallringen (Durchmesser 60 mm) eingespannt und darauf aus 70 cm Höhe eine Stahlkugel (761 g, Durchmesser: 57,1 mm) fallen gelassen. Die Zugseite des geschädigten Prüfkörpers wird mit roter Farbstofflösung (Diffusionsrot, Firma H. Klumpf) eingesprüht, nach 5 min mit Wasser abgewaschen, getrocknet und der Durchmesser der roten Schädigungszone ermittelt. Durch die Mitte der Schädigungszone wird aufgeschnitten und an der Schnittfläche die Dicke der roten Zone gemessen (Lupe mit Skala). Je geringer die Zahlenwerte beider Meßgrößen sind, desto unempfindlicher verhalten sich die Formstoffe bei Stoß- oder Schlagbeanspruchung.

**Tabelle 1**

| | Formstoff aus SMC 1b |
|---|---|
| E-Modul (nach EN 63) [N/mm²] | 13.000 |
| Schlagzähigkeit (23°C) (nach DIN 53 453) [kJ/m²] | 112 |
| Kugelfalltest Schädigungstiefe [mm] | 1,5 |
| Schädigungszone [mm] (Durchmesser) | 15 |

### c) Phasenhaftung im Formstoff

Aus der Dispersion 1a wurde folgende Mischung hergestellt:

| | |
|---|---|
| 100 | Teile Dispersion 1a |
| 3 | Teile Siliciumdioxid Aerosil ® |
| 1,5 | Teile tert.-Butylperbenzoat |

Die Paste wurde in einem Stahlwerkzeug (Rondell mit 60 mm Durchmesser und 4 mm Tiefe) 10 Minuten bei 145°C unter einem Druck von 200 bar verpreßt. Die rasterelektronenmikroskopische Aufnahme einer Bruchfläche des Formstoffs zeigt die ausgezeichnete Anbindung der dispersen Polyethylenphase (Hohlkugel) an die kohärente UP-Harzmatrix.

### Beispiel 2

### a) Herstellung einer Dispersion

In einem Rührgefäß mit Ankerrührer wurden 48,2 Teile UP-Harz A2 unter Stickstoff auf 160°C erwärmt, mit 2,07 Teilen Dispergierhilfsmittel C1 versetzt und die Rührgeschwindigkeit auf 230 Umdrehungen pro Minute eingestellt. Portionsweise wurden nun 20 Teile Polyethylengranulat B1 zugefügt, 20 min bei 160°C gerührt und langsam auf 106°C abgekühlt. Bei dieser Temperatur begann man mit dem Zulauf von 29 Teilen Styrol, in dem 0,03 Teile 2,6-Dimethylchinon zur Stabilisierung enthalten waren. Es resultierte eine feinteilige Polyethylen-dispersion mit einer Partikelgrößenverteilung zwischen 2 und 5 µm, die beim wochenlangen Lagern (23°C) nicht aufrahmte.

### b) Herstellung eines Formstoffs

70 Teile Dispersion 2a wurden mit 1,4 Teilen Methylethylketonperoxid (MEKP, LA 3), 0,7 Teilen Co-Beschleuniger (1 % Co) und 0,7 Teilen Biscyclohexylperoxydicarbonat (Perkadox 16) katalysiert und in einem Polyethylenbecher (Tiefe 75 mm, Weite 60 mm) bei 60°C gelagert. Es entstand ein weißer Formstoff ohne geringste Anzeichen für einen Riß.

Zum Vergleich wurde UP-Harz A2 70 %ig in Styrol gelöst und mit 50 ppm 2,6-Dimethylchinon stabilisiert. 70 Teile dieses klaren Harzes wurden wie oben beschrieben katalysiert und bei 60°C gelagert. Es entstand ein transparenter, von zahlreichen Rissen völlig zerstörter Formstoff.

### Beispiele 3 bis 6 und Vergleichsbeispiele

### a) Herstellung der Dispersionen

In einem Rührgefäß mit Ankerrührer wurden die ungesättigten Polyester Al, A4 und A6 unter Stickstoff aufgeschmolzen, die Schmelze auf 179°C eingestellt (bei den Beispielen 5 und 6 auf 150°C), mit Disperqierhilfsmitteln und schließlich mit Ethylenpolymerisaten in den angegebenen Mengenverhältnissen (Tabelle 2) versetzt. Nach 25 Minuten Rührung mit 230 Umdrehungen pro Minute wurde abgekühlt, bei 123 bis 130°C portionsweise Styrol zugemischt, in dem 2,6-Dimethylchinon als Inhibitor gelöst war, und die Dispersionen durch Messung der Viskosität und der Partikelgröße (lichtmikroskopisch) geprüft. Die Vergleichsdispersion war sehr grob und rahmte nach kurzer Lagerzeit auf, so daß die Viskosität nicht gemessen wurde.

### b) Herstellung und Prüfung von Naßpreßlaminaten

Mit einem schnell laufenden Rührwerk wurden aus den Dispersionen 3a, 4a, 5a und 6a folgende Mischungen hergestellt:

| | |
|---|---|
| 100 | Teile Dispersion 3a bis 6a |
| 100 | Teile Füllstoff Kreide Millicarb ® |
| 3,5 | Teile Zn-Stearat |
| 1,5 | Teile tert.-Butylperbenzoat |

Durch Tränken von fünf Lagen Glasfasermatten (styrolunlöslich gebunden) wurden Laminate erhalten, die in einem Plattenwerkzeug aus Stahl (4x150x150 mm) bei 145°C unter 200 bar 10 Minuten verpreßt und durch den Kugelfalltest geprüft wurden.

Zum Vergleich wurden die UP-Harze A1 und A4 jeweils 70 %ig in Styrol gelöst, mit 200 ppm 2,6-Dimethylchinon stabilisiert und analog zu den Dispersionen über Naßpreßlaminate durch den Kugelfalltest geprüft.

Die Ergebnisse in Tabelle 2 zeigen, daß die erfindungsgemäßen Laminate mit disperser Polyethylenphase geringere Stoßempfindlichkeit aufweisen als solche auf reiner UP-Harzbasis. Nur die Vergleichslaminate wiesen nach der Herstellung bereits Risse am Rand auf.

**Tabelle 2**

| Beispiele | 3 | 4 | Vergleich | 5 | 6 | Vergleich | Vergleich |
|---|---|---|---|---|---|---|---|
| Teile UP-Harz | 48,6 A1 | 47,9 A1 | 45,8 A1 | 46,9 A4 | 44,7 A4 | 70 A1 | 70 A4 |
| | | | | | | | |
| Teile Dispergiermittel | 0,7 C2 | 2,1 C3 | - | 2,0 C4 | 6,3 C5 | - | |
| | | | | | | | |
| Teile Ethylenpolymerisat | 20,8 B2 | 20,5 B2 | 24,0 B2 | 20,1 B1 | 19,0 B1 | - | |
| | | | | | | | |
| Teile Styrol | 29,9 | 29,5 | 30,2 | 30,0 | 30,0 | 30,0 | 30,0 |
| | | | | | | | |
| Teile Dimethylchinon | 0,09 | 0,09 | 0,09 | 0,005 | 0,01 | 0,02 | 0,02 |
| Viskosität [mPa·s] (23°C) | 8.670 | 10.080 | | 5.100 | 13.480 | 1.900 | 1.200 |
| Partikeldurchmesser [µm] | 15-65 | 10-65 | 200-5.000 | 10-50 | 2-50 | - | |
| Stabilität der Dispersion | mäßig | mäßig | schlecht | sehr gut | sehr gut | - | - |
| Kugelfalltest | | | | | | | |
| | | | | | | | |
| Schädigungszone [mm] | 17 | 16 | - | 15 | 17 | 23 | 22 |
| | | | | | | | |
| Schädigungstiefe [mm] | 2,0 | 2,0 | - | 2,5 | 2,5 | 3,8 | 3,8 |

### Beispiel 7

### a) Herstellung einer styrolfreien Polyethylendispersion

In einem Rührgefäß mit Ankerrührer wurden 40,8 Teile UP-Harz A3 unter Stickstoff auf 180°C erwärmt, bei einer Rührgeschwindigkeit von 230 Umdrehungen pro Minute mit 1,74 Teilen Dispergiermittel C1 und anschließend mit 17,5 Teilen Ethylenpolymerisat B1 portionsweise versetzt. Dabei fiel die Schmelzetemperatur auf 145°C. Sie wurde 20 Minuten gehalten, danach langsam auf 110°C abgesenkt und der Zulauf von 15,6 Teilen Hydroxyethylmethacrylat sowie bei 81°C anschließend von 11,1 Teilen Trimethylolpropantrimethacrylat durchgeführt. Das Hydroxyethylmethacrylat enthielt 0,05 Teile 2,6-Dimethylchinon. Bei Raumtemperatur wurde mit 15 Teilen Diallylphthalat verdünnt.

Die feinteilige Polyethylendispersion wies nach lichtmikroskopischer Untersuchung eine Partikelgrößenverteilung zwischen 2 bis 5 µm auf. Sie war bei wochenlanger Lagerung (23°C) lagerstabil und rahmte nicht auf.

### b) Herstellung und Prüfung eines Formstoffes

Mit Hilfe eines Rührwerks wurde folgende Mischung hergestellt:

| | |
|---|---|
| 100 | Teile Dispersion 7a |
| 1,5 | Teile tert.-Butylperbenzoat |
| 3,0 | Teile Aerosil ®, amorphe Kieselsäure |

Die Paste wurde in einem Stahlwerkzeug (Rondell mit 60 mm Durchmesser und 4 mm Tiefe) 10 min bei 145°C unter einem Druck von 200 bar verpreßt.

Es resultierte ein rißfreier, harter Formstoff, der opak aussah. Eine rasterelektronenmikroskopische Aufnahme (Y) der Bruchfläche zeigt eine ausgezeichnete Haftung beider Phasen. Die disperse Polyethylenphase ist durch den Bruchvorgang länglich deformiert, ohne daß Ablösungen in der Grenzfläche zur kohärenten UP-Harzmatrix auftraten.

### Beispiele 8 und 9

8a) Herstellung der Dispersionen
   In einem Rührgefäß mit Ankerrührer, Mantelheizung und Bodenablaßventil wurde 47,6 Teile UP-Harz A2 unter Stickstoff auf 150°C erwärmt, 2 Teile Dispergiermittel C1 und danach portionsweise 20 Teile Ethylenpolymerisat B3 zugefügt. Die Rührgeschwindigkeit betrug 230 Umdrehungen pro Minute und die Schmelzetemperatur wurde auf 168°C gebracht. Die homogene Schmelze wurde dann innerhalb von etwa 15 Minuten über einen beheizten Ablauf in einen zweiten Rührkessel zudosiert, in dem 30 Teile Styrol mit 0,005 Teilen Inhibitor 2,6-Dimethylchinon vorgelegt und so gekühlt wurden, daß die Mischtemperatur nicht über 50°C anstieg. Es resultierte eine feinteilige Dispersion mit der Viskosität von 2.900 [mPa·s] (23°C) und einer Partikelgrößenverteilung zwischen 2 und 60 µm.
9a) Beispiel 8a wurde mit Propylenpolymerisat B4 wiederholt, wobei die Schmelzetemperatur der UP-Harz/Polmermischung auf 180°C angehoben wurde, bevor der Zulauf in die Monomervorlage begann. Die Dispersion wies eine Partikelgrößenverteilung zwischen 5 und 150 µm auf und die Viskosität (23°C) betrug 2.500 [mPa·s].

### b) Herstellung und Prüfung von Naßpreßlaminaten

Mit einem schnell laufenden Rührwerk wurden aus den Dispersionen 8a und 9a folgende Mischungen hergestellt:

| | |
|---|---|
| 100 | Teile Dispersion |
| 100 | Teile Füllstoff Kreide Millicarb ® |
| 3,5 | Teile Zn-Stearat |
| 1,5 | Teile tert.-Butylperbenzoat |

Herstellung und Prüfung der Naßpreßlaminate durch den Kugelfalltest erfolgten wie in Patentbeispielen 3 bis 6 beschrieben. Die Ergebnisse in Tabelle 3 zeigen, daß die erfindungsgemäßen Laminate eine geringere Stoßanfälligkeit aufweisen, als solche aus vergleichbaren UP-Harzen ohne disperse Polyolefinphase (vergleiche in Tabelle 2).

**Tabelle 3**

| Naßpreßlaminat | 8b | 9b | 10 |
|---|---|---|---|
| Kugelfalltest | | | |
| Schädigungstiefe [mm] | 2,5 | 2,2 | 1,5 |
| Schädigungszone [mm] | 17 | 20 | 15 |

### Beispiel 10

Eine VE-Harzdispersion wurde durch Mischen von VE-Harz 5 und Polyethylen-Dispersion 1a im Gewichtsverhältnis 1:1 hergestellt. Sie war homogen und wies eine Viskosität von 780 [mPa·s] (23°C) auf.

Zur Herstellung und Prüfung eines Naßpreßlaminats wurde mit einem schnell laufenden Rührwerk folgende Mischung hergestellt:

| | |
|---|---|
| 100 | Teile Dispersion |
| 100 | Teile Füllstoff Kreide Millicarb ® |
| 3,5 | Teile Zn-Stearat |
| 1,5 | Teile tert.-Butylperbenzoat |

Herstellung und Prüfung durch den Kugelfalltest erfolgte analog zu den Naßpreßlaminaten in den Beispielen 3 bis 6. Die Ergebnisse in Tabelle 3 zeigen, daß selbst bei relativ niedrigem Polyethylengehalt Formstoffe mit verminderter Stoßfähigkeit resultiern.

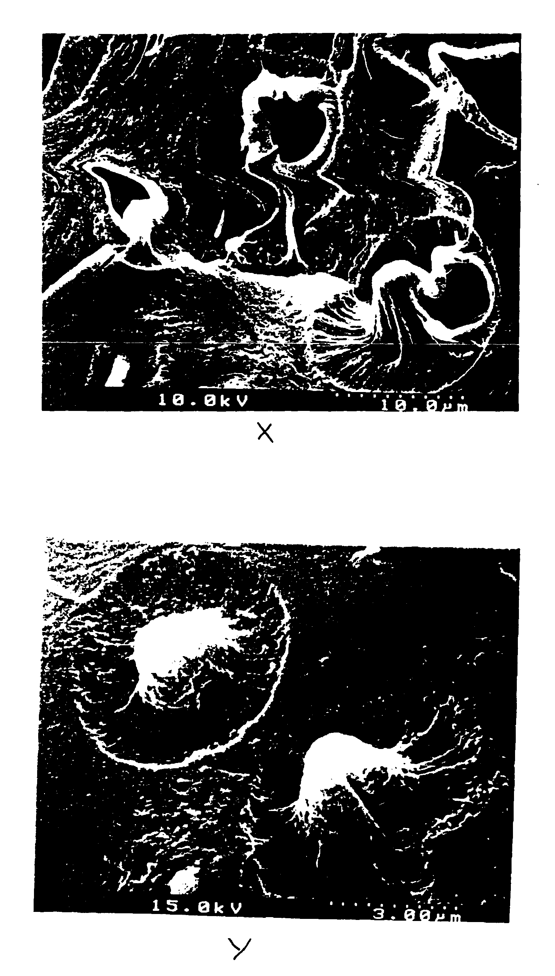

## Patentansprüche

1. Härtbare Formmasse, enthaltend
A. als kohärente Phase ein radikalisch härtbares, ungesättigtes Polyesterharz und
B. als disperse Phase feinteilige Polyolefinpartikel,
dadurch gekennzeichnet, daß die Phasen A und B durch ionische Bindungen an den Grenzflächen chemisch miteinander verbunden sind.

2. Härtbare Formmasse nach Anspruch 1, dadurch gekennzeichnet, daß die kohärente Phase A ein Säuregruppen tragendes Polymeres oder Oligomeres, und die disperse Phase B ein Aminogruppen tragendes Polymeres oder Oligomeres enthält.

3. Härtbare Formmasse nach Anspruch 2, dadurch gekennzeichnet, daß das ungesättigte Polyesterharz selbst Carboxylendgruppen trägt.

4. Härtbare Formmasse nach Anspruch 2, dadurch gekennzeichnet, daß das ungesättigte Polyesterharz ein Vinylester-, Vinylesterurethan- oder ungesättigtes Polyesterharz ohne Carboxylgruppen ist, welches 2 bis 50 Gew.-%, bezogen auf A, eines Säuregruppen tragenden Oligomeren oder Polymeren zugemischt enthält.

5. Härtbare Formmasse nach Anspruch 2, dadurch gekennzeichnet, daß das Polyolefin selbst aliphatische Aminogruppen trägt.

6. Härtbare Formmasse nach Anspruch 2, dadurch gekennzeichnet, daß das Polyolefin 1 bis 40 Gew.-%, bezogen auf B, eines aliphatische Aminogruppen tragenden, oligomeren oder polymeren Dispergiermittels C zugemischt enthält.

7. Härtbare Formmasse nach Anspruch 6, dadurch gekennzeichnet, daß das Dispergiermittel C ein Copolymer des Ethylens mit 2 bis 50 Gew.-% eines aliphatische Aminogruppen tragenden Acrylats oder Methacrylats mit einem Molekulargewicht (M_{w}) zwischen 2.000 und 80.000 ist.

8. Härtbare Formmasse nach Anspruch 1, dadurch gekennzeichnet, daß das Gewichtsverhältnis der Phasen A:B zwischen 95:5 und 50:50 beträgt.

9. Härtbare Formmasse nach Anspruch 1, dadurch gekennzeichnet, daß sie 0,001 bis 2,0 Gew.-% Stickstoff enthält, der zumindest teilweise in Form von Ammoniumionen gebunden ist.

10. Härtbare Formmasse nach Anspruch 1, dadurch gekennzeichnet, daß die mittlere Teilchengröße der Polyolefinpartikel zwischen 1 und 100 µm, vorzugsweise zwischen 3 und 30 µm liegt.

11. Härtbares Halbzeug, enthaltend die Formmasse nach Anspruch 1, sowie übliche Zusatzstoffe D.

12. Gehärtetes Formteil, enthaltend
A. als kohärente Phase ein gehärtetes Polyesterharz,
B. als disperse Phase feinteilige Polyolefinpartikel,
D. übliche Zusatzstoffe,
dadurch gekennzeichnet, daß die Phasen A und B an den Grenzflächen durch ionische Bindungen chemisch miteinander verbunden sind und dadurch fest aneinander haften.

## Claims

1. A curable moulding composition, containing
A. a radically curable, unsaturated polyester resin as its coherent phase and
B. fine polyolefin particles as its disperse phase,
characterised in that phases A and B are connected together chemically at the boundary surfaces by ionic bonds.

2. A curable moulding composition according to claim 1, characterised in that coherent phase A contains an acid group-carrying polymer or oligomer, and disperse phase B contains an amino group-carrying polymer or oligomer.

3. A curable moulding composition according to claim 2, characterised in that the unsaturated polyester resin itself carries carboxyl end groups.

4. A curable moulding composition according to claim 2, characterised in that the unsaturated polyester resin is a vinyl ester, vinyl ester urethane or unsaturated polyester resin without carboxyl groups, which has added to it from 2 to 50 wt.%, based on A, of an acid group-carrying oligomer or polymer.

5. A curable moulding composition according to claim 2, characterised in that the polyolefin itself carries aliphatic amino groups.

6. A curable moulding composition according to claim 2, characterised in that the polyolefin has added to it from 1 to 40 wt.%, based on B, of an oligomeric or polymeric dispersing agent C carrying aliphatic amino groups.

7. A curable moulding composition according to claim 6, characterised in that the dispersing agent C is a copolymer of ethylene with from 2 to 50 wt.% of an acrylate or methacrylate, carrying aliphatic amino groups, with a molecular weight (M_{w}) of between 2,000 and 80,000.

8. A curable moulding composition according to claim 1, characterised in that the weight ratio of the phases A:B is between 95:5 and 50:50.

9. A curable moulding composition according to claim 1, characterised in that it contains from 0.001 to 2.0 wt.% of nitrogen, which is at least partially bonded in the form of ammonium ions.

10. A curable moulding composition according to claim 1, characterised in that the average particle size of the polyolefin particles lies between 1 and 100 µm, preferably between 3 and 30 µm.

11. A curable semi-finished product, comprising the moulding composition according to claim 1 as well as conventional additives D.

12. A cured moulding, containing
A. a cured polyester resin as its coherent phase,
B. fine polyolefin particles as its disperse phase,
D. conventional additives,
characterised in that phases A and B are bonded together chemically at the boundary surfaces by ionic bonds and thereby adhere firmly to each other.

## Revendications

1. Masse moulée durcissable contenant
A. Comme phase cohérente une résine polyester insaturée durcissable par voie radicalaire et
B. Comme phase dispersée des particules fines de polyoléfine ,
caractérisée en ce que les phases A et B sont liées entre elles chimiquement par des liaisons ioniques aux limites.

2. Masse à mouler durcissable selon la revendication 1, caractérisée en ce que la phase cohérente A est un polymère ou oligomère portant des groupes acides, et en ce que la phase dispersée B contient un polymère ou oligomère portant des groupes amino.

3. Masse à mouler durcissable selon la revendication 2, caractérisée en ce que la résine polyester insaturée porte elle-même des groupes d'extrémités carboxyles.

4. Masse à mouler durcissable selon la revendication 2, caractérisée en ce que la résine polyester insaturée est une résine d'ester de vinyle, une résine ester de vinyle-uréthane ou une résine polyester insaturée sans groupes carboxyle, qui contient en mélange, de 2 à 50% en poids, par rapport à A, d'un oligomère ou polymère portant des groupes acides.

5. Masse à mouler durcissable selon la revendication 2, caractérisée en ce que la polyoléfine elle-même porte des groupes amino aliphatiques.

6. Masse à mouler durcissable selon la revendication 2, caractérisée en ce que la polyoléfine contient de 1 à 40%, par rapport à B, d'un dispersant oligomère ou polymère C portant des groupes amino aliphatiques.

7. Masse à mouler durcissable selon la revendication 6, caractérisée en ce que le dispersant C est un copolymère d'éthylène avec de 2 à 50% en poids d'un acrylate ou méthacrylate portant des groupes amino aliphatiques ayant un poids moléculaire (M_{w}) compris entre 2 000 et 80 000.

8. Masse à mouler durcissable selon la revendication 1, caractérisée en ce que le rapport pondéral des phases A et B est compris entre 95:5 et 50:50.

9. Masse à mouler durcissable selon la revendication 1, caractérisée en ce qu'elle contient de 0,001 à 2,0% en poids d'azote, qui au moins en partie est lié sous forme d'ions ammonium.

10. Masse à mouler durcissable selon la revendication 1, caractérisée en ce que la taille particulaire moyenne des particules de polyoléfines se situe entre 1 et 100 µm, de préférence entre 3 et 30 µm.

11. Semi-produit durcissable contenant la masse à mouler selon la revendication 1, ainsi que les additifs D habituels.

12. Pièce moulée durcie contenant,
A. Comme phase cohérente une résine polyester durcie,
B. Comme phase dispersée, des particules fines de polyoléfine,
D. Les additifs habituels,
caractérisée en ce que les phases A et B sont chimiquement liées entre elles aux limites par des liaisons ioniques et adhèrent ainsi solidement entre elles.
